# EUROPÄISCHE PATENTSCHRIFT

(11) **EP 3 553 220 B1**
(45) Veröffentlichungstag und Bekanntmachung des Hinweises auf die Patenterteilung: **14.09.2022**
(21) Anmeldenummer: 18209898.8
(22) Anmeldetag: 03.12.2018
(51) Int. Cl.: D06F 34/22, G01N 21/85, D06F 103/16, D06F 103/20

(54) **SENSORVORRICHTUNG UND VERFAHREN ZUR UNTERSUCHUNG EINER FLÜSSIGKEIT UND WASCHMASCHINE**
SENSOR DEVICE AND METHOD FOR INSPECTING A LIQUID AND WASHING MACHINE
DISPOSITIF CAPTEUR ET PROCÉDÉ D'ANALYSE D'UN LIQUIDE ET LAVE-LINGE

(30) Priorität: 11.04.2018 DE 102018205502
(43) Veröffentlichungstag der Anmeldung: 16.10.2019
(73) Patentinhaber: E.G.O. Elektro-Gerätebau GmbH, 75038 Oberderdingen (DE)
(72) Erfinder: Bold, Georg, 79104 Freiburg (DE); Kampowski, Tim, 79106 Freiburg (DE); Langer, Max, 79100 Freiburg (DE); Masselter, Tom, 79102 Freiburg (DE); Riffel, Michael, 75038 Oberderdingen (DE); Schaumann, Uwe, 75038 Oberderdingen (DE); Speck, Thomas, 79227 Schallstadt (DE); Thielen, Marc, 79104 Freiburg (DE)
(74) Vertreter: Patentanwälte Ruff, Wilhelm, Beier, Dauster & Partner mbB

(56) Entgegenhaltungen:
- EP-A2- 1 472 967
- DE-C1- 10 146 641
- GB-A- 2 553 218
- US-A- 3 559 482

## Beschreibung

### Anwendungsgebiet und Stand der Technik

Die Erfindung betrifft eine Sensorvorrichtung zur Untersuchung einer Flüssigkeit, insbesondere in einem wasserführenden Haushaltsgerät wie einer Waschmaschine, und zwar zur Untersuchung der Waschlauge. Die Erfindung betrifft außerdem eine solche Waschmaschine und ein Verfahren zur Untersuchung einer Flüssigkeit, vorzugsweise wie zuvor beschrieben in einer Waschmaschine.

Aus der EP 1 472 967 A2 ist eine Waschmaschine mit einer Sensorvorrichtung samt Trübungssensor bekannt, bei der von einem Haupt-Kanal, in dem Flüssigkeit entlangströmt, eine Einlass-Leitung abgeht zu einer Sensorkammer. In der Sensorkammer ist ein Rückströmbereich ausgebildet durch eine bauchige und nach außen weisende Ausformung. Innerhalb dieses Rückströmbereichs ist ein Trübungssensor angeordnet, um Schmutzpartikel in der Flüssigkeit zu erkennen. So wird die Erkennung solcher Schmutzpartikel durch den Trübungssensor verbessert. Aus der DE 101 46 641 C1 ist eine weitere Anordnung eines Trübungssensors an einer Sensorvorrichtung für eine Spülmaschine oder Waschmaschine bekannt, bei der in ähnlicher Form von einem Haupt-Kanal eine Leitung nach Art einer Schleife abzweigt. Diese Leitung ist strömungsberuhigt, und mittels eines dort angeordneten Trübungssensors können Schmutzpartikel besser erkannt werden, indem Luftblasen von diesen abgetrennt werden.

Aus der US 3 559 482 A ist eine weitere Anordnung eines Durchfluss-Sensors bekannt, bei dem von einem Haupt-Kanal ein Abzweig zu einem thermischen Massendurchflussmesser und wieder zurück in den Haupt-Kanal führt. Ferner weist die Anordnung eine Quer-Leitung auf, welche fluidtechnisch parallel geschaltet ist zu dem Durchflussmesser.

### Aufgabe und Lösung

Der Erfindung liegt die Aufgabe zugrunde, eine eingangs genannte Sensorvorrichtung zur Untersuchung einer Flüssigkeit, eine Waschmaschine und ein entsprechendes Verfahren zu schaffen, mit denen Probleme des Standes der Technik gelöst werden können und es insbesondere möglich ist, in einem wasserführenden Haushaltsgerät wie einer Waschmaschine eine Waschlauge zu untersuchen und/oder zu reinigen und ggf. auch Stoffe beizumischen.

Gelöst wird diese Aufgabe durch eine Sensorvorrichtung mit den Merkmalen des Anspruchs 1, durch eine Waschmaschine mit den Merkmalen des Anspruchs 10 sowie durch ein Verfahren mit den Merkmalen des Anspruchs 12 oder 13. Vorteilhafte sowie bevorzugte Ausgestaltungen der Erfindung sind Gegenstand der weiteren Ansprüche und werden im Folgenden näher erläutert. Dabei werden manche der Merkmale nur für die Sensorvorrichtung oder nur für die Waschmaschine oder nur für das Verfahren erläutert. Sie sollen jedoch unabhängig davon sowohl für die Sensorvorrichtung als auch für die Waschmaschine und für das Verfahren selbständig und unabhängig voneinander gelten können. Der Wortlaut der Ansprüche wird durch ausdrückliche Bezugnahme zum Inhalt der Beschreibung gemacht.

Die Sensorvorrichtung zur Untersuchung einer Flüssigkeit weist eine Wasserführung, eine Sensorkammer in der Wasserführung und einen Sensor in oder an der Sensorkammer zur Untersuchung einer Flüssigkeit auf. Die Wasserführung weist einen Haupt-Kanal, in dem Flüssigkeit in einer Fließrichtung entlangströmt, eine Einlass-Leitung, die an einer Einlass-Öffnung von dem Haupt-Kanal zu der Sensorkammer abgeht, eine Auslass-Leitung, die von der Sensorkammer zu einer Auslass-Öffnung an dem Hauptkanal abgeht, und mindestens eine Quer-Leitung auf zwischen der Einlass-Leitung und der Auslass-Leitung. Diese Quer-Leitung ist fluidtechnisch parallel geschaltet zu der Sensorkammer, wobei die Auslass-Öffnung flussabwärts von der Einlass-Öffnung liegt. Durch diese Quer-Leitung ist es möglich, in der Sensorkammer für eine gewisse Beruhigung der Flüssigkeit zu sorgen, zumindest bei einer gewissen Durchströmung des Haupt-Kanals. Diese Durchströmung des Haupt-Kanals kann dazu dienen, Flüssigkeit nicht nur zur Sensorkammer zu transportieren sondern auch an andere Bereiche wie beispielsweise einer Schublade einer Waschmaschine, in der Waschmittel und andere Zusatzstoffe sein können zur Beimischung zum Waschvorgang, ggf. zu bestimmten Zeitpunkten. Die Quer-Leitung sorgt für eine Beruhigung der Flüssigkeit in der Sensorkammer, da sie einen zumindest teilweisen Druckausgleich schafft zwischen Einlass-Leitung und Auslass-Leitung. Unter Umständen kann sogar ein beruhigter Zustand erreicht werden. Somit kann der Haupt-Kanal durchströmt sein, und dennoch kann in der Sensorkammer bei einigermaßen oder weitgehend beruhigter Flüssigkeit etwas gemessen werden. Ein Sensor in der Sensorkammer kann vielfältig ausgebildet sein, es können auch mehrere Sensoren vorgesehen sein. Es kann beispielsweise ein Trübungssensor sein zur Untersuchung auf Verunreinigungen. Weitere Möglichkeiten für Sensoren werden nachfolgend noch genannt.

So kann durch die Erfindung die Möglichkeit geschaffen werden, auf Ventile oder Klappen odgl. mit aufwendigen Aktoren zu verzichten und dennoch mehrere vorteilhafte Untersuchungen durchführen zu können.

Vorteilhaft kann die Sensorvorrichtung bis auf Auslass-Öffnungen und Einlass-Öffnungen sowie evtl. Zugangsöffnungen nach außen wasserdicht ausgebildet sein, vorteilhaft als eine Baueinheit ausgebildet sein. Sie kann ein umgebendes Gehäuse aufweisen mit Öffnungen für die Wasserführung bzw. den Hauptkanal, also zum Hineinströmen und zum Hinausströmen von Flüssigkeit. Zusätzlich kann mindestens ein Auslass als Öffnung nach unten vorgesehen sein, vorteilhaft um ausgefilterte oder ausgeschiedene Körper oder gröbere Verunreinigungen entfernen zu können, die einen Vorgang in der Sensorkammer stören könnten oder feine Strukturen verstopfen könnten. Vorzugsweise kann mindestens eine Zugangsöffnung zu der Sensorkammer vorgesehen sein, bevorzugt von oben, entweder zum Einsetzen oder zum Ersetzen eines Sensors, beispielsweise wenn er kaputt oder verbraucht ist. So können auch sogenannte Einweg-Sensoren für einen einzigen Arbeitszyklus bzw. Waschvorgang verwendet werden, wie sie insbesondere als lab-on-the-chip bekannt sind und recht kostengünstig sind.

In Ausgestaltung der Erfindung kann die Wasserführung mit dem Haupt-Kanal, der Einlass-Öffnung und der Auslass-Öffnung derart für einen Venturi-Effekt an der Auslass-Öffnung ausgebildet sein, dass zur Einlass-Öffnung in die Einlass-Leitung eintretende Flüssigkeit durch die Auslass-Öffnung von der Auslass-Leitung in den Haupt-Kanal hinein abgesaugt wird. Vorteilhaft erfolgt dies bei einer bestimmten Durchströmung des Haupt-Kanals, also einer bestimmten Strömungsgeschwindigkeit. Durch den Venturi-Effekt wird die Flüssigkeit aus dem Haupt-Kanal durch die Einlass-Öffnung in die Einlass-Leitung eingesaugt, so dass sie auch die Sensorkammer durchströmt bzw. die dort befindliche Flüssigkeit austauscht. Je nach Strömungsgeschwindigkeit im Haupt-Kanal kann dies variieren. Vor allem kann durch die genannte Quer-Leitung zumindest für die Sensorkammer eine gewisse Beruhigung stattfinden, da ja durch diese Quer-Leitung genügend Flüssigkeit hindurchfließen kann, wie sie durch den Venturi-Effekt abgesaugt wird, um diesen sozusagen von der Sensorkammer weitgehend oder vollständig fernzuhalten, so dass die Sensorkammer nur gering oder gar nicht durchströmt wird.

In weiterer Ausgestaltung der Erfindung kann vor der Auslass-Öffnung, insbesondere stromabwärts von der Einlass-Öffnung bzw. dahinter, eine Querschnittsverengung im Haupt-Kanal vorgesehen sein. Diese kann als Venturi-Düse für den genannten Venturi-Effekt dienen, wobei vorzugsweise die Auslass-Öffnung innerhalb des verengten Querschnitts im Haupt-Kanal vorgesehen ist. So kann die Saugwirkung für den genannten Venturi-Effekt beeinflusst bzw. eingestellt werden und damit auch der Durchfluss durch die Sensorvorrichtung selbst.

In Ausgestaltung der Erfindung kann die mindestens eine Quer-Leitung näher an der Einlass-Öffnung und an der Auslass-Öffnung liegen als die Sensorkammer. Vorzugsweise können mehrere Quer-Leitungen vorgesehen sein, wobei es bevorzugt ist, wenn jede dieser Quer-Leitungen näher an der Einlass-Öffnung und an der Auslass-Öffnung liegt als die Sensorkammer. Bei der Erfindung sind die Einlass-Öffnung, die Auslass-Öffnung, ein Fluidwiderstand der mindestens einen Quer-Leitung und ein Fluidwiderstand der Sensorkammer derart ausgebildet, dass bei mindestens einer bestimmten Durchströmung des Haupt-Kanals keine Strömung in der Sensorkammer vorliegt, sodass die Sensorkammer bei dieser bestimmten Durchströmung des Haupt-Kanals vollständig strömungsfrei ist.

In weiterer Ausgestaltung der Erfindung können ein Fluidwiderstand der Einlass-Leitung und ein Fluidwiderstand der Auslass-Leitung derart ausgebildet sein, dass bei der bestimmten Durchströmung des Haupt-Kanals keine Strömung in der Sensorkammer oder nur eine geringe Strömung vorliegt. Dies kann ggf. zusammen mit den vorgenannten Faktoren so abgestimmt sein, so dass es mehrere mögliche Einflussmöglichkeiten gibt. Diese müssen dann zwar unter Umständen aufwändig abgestimmt werden, es kann aber Rücksicht auf mehrere Bedingungen genommen werden. Damit sind keine Zusatzkomponenten wie Ventile odgl. notwendig.

In einer Ausbildung der Erfindung können die Einlass-Leitung und/oder die Auslass-Leitung und/oder die mindestens eine Quer-Leitung in ihrem Längsverlauf jeweils eine gleichbleibende Querschnittsfläche aufweisen, insbesondere einen gleichbleibenden Querschnitt aufweisen. Sie können also beispielsweise sozusagen zylindrisch sein. So können sie einfach ausgebildet sein. Alternativ kann allgemein mindestens eine der Leitungen zur Erzeugung einer verwirbelten Strömung ausgebildet sein, beispielsweise mit einer nachfolgend noch erläuterten Verwirbelungsvorrichtung, vorzugsweise durch einen gebogenen, mäandernden, oder kurvigen Verlauf, oder durch einen variierenden Querschnitt, der nicht konstant ist. So kann vorteilhaft mindestens eine Einschnürung als Verringerung eines Querschnitts bzw. als Verwirbelungsvorrichtung vorhanden sein.

In weiterer Ausbildung der Erfindung können eine Querschnittsfläche der Einlass-Leitung und/oder der Auslass-Leitung zwischen 0,5 mm² und 10 mm² oder sogar 20 mm² liegen, vorzugsweise zwischen 1 mm² und 5 mm² bzw. 10 mm². Eine Querschnittsfläche der Einlass-Leitung kann mindestens 10% größer sein als eine Querschnittsfläche der Auslass-Leitung, vorzugsweise mindestens 50% oder sogar mindestens 100%.

Die Einlass-Leitung kann allgemein in etwa so lang sein wie die Auslass-Leitung, wobei die beiden Leitungen bevorzugt in etwa parallel geführt sein können. Dabei ist es möglich, dass die beiden Leitungen in einer Ausgestaltung der Erfindung weitgehend gerade sind bis auf Biegungen am Anfang und am Ende, so dass sie zumindest in einem Mittelbereich weitgehend gerade sind, beispielsweise über 50% bis 80% ihrer Länge. In einer speziellen Ausgestaltung kann die Einlass-Leitung allerdings mindestens 10% länger sein als die Auslass-Leitung, vorzugsweise 20% bis 50%. Dazu können die Einlass-Leitung und/oder die Auslass-Leitung gebogen ausgebildet sein, vorzugsweise mit gleichsinniger Biegung, und insbesondere in einer Ebene verlaufen.

Vorteilhaft kann eine Verwirbelungsvorrichtung in der Wasserführung bzw. in dem Haupt-Kanal vorgesehen sein, insbesondere vor der Einlass-Öffnung, vorzugsweise auch in einer Flüssigkeitsleitung, beispielsweise bei einer Anwendung in einer vorgenannten Waschmaschine. Die Flüssigkeitsleitung kann hin zu der Sensorvorrichtung führen, so dass die Verwirbelungsvorrichtung Teil der Sensorvorrichtung oder der von ihr gebildeten Baueinheit sein kann. Die Verwirbelungsvorrichtung kann von einer Wand bzw. einer Kanalwand abstehen und dabei in die in Fließrichtung strömende Flüssigkeit derart hineinragen, dass diese an ihr vorbeiströmt, insbesondere davor laminar strömt und dahinter verwirbelt bzw. turbulent ist. Dazu kann die Verwirbelungsvorrichtung zwischen 10% und 60% der Kanalweite oder -höhe in ihrer Erstreckungsrichtung abstehen. Durch die Verwirbelung hinter der Verwirbelungsvorrichtung können sich dort Partikel oder Gegenstände, die in der Flüssigkeit enthalten sind, insbesondere mit einer Größe zwischen 0,1 mm und 5 mm, vorzugsweise 1 mm bis 3 mm, sammeln. An dieser Stelle können sie so aus der weiterströmenden Flüssigkeit entfernt werden, was nachfolgend noch näher erläutert wird. Die Verwirbelungsvorrichtung kann schräg winklig oder ansteigend ausgebildet sein und von der Kanalwand abstehen. Dies kann in vorteilhafter Ausgestaltung sogar variabel bzw. einstellbar ausgebildet sein.

In Fließrichtung hinter der Verwirbelungsvorrichtung kann eine Öffnung in dem Kanal oder in der entsprechenden Flüssigkeitsleitung vorgesehen sein, insbesondere an einem in vertikaler Richtung unteren Bereich, also sozusagen auf dem Boden. Von diesem Boden steht bzw. geht dann vorteilhaft auch die Verwirbelungsvorrichtung ab. Vorzugsweise kann die Öffnung mit einer bewegbaren Verschlussklappe verschlossen sein oder werden, wobei die Verschlussklappe diese Öffnung von oben verschließt, d.h. sie von oben abdeckt und bedeckt, alternativ auch in sie hineinbewegt wird.

Die Verschlussklappe kann im Wesentlichen rechteckig ausgebildet und an einer Seite mit der Wandung des Kanals oder der Flüssigkeitsleitung, die um die Öffnung herum gegeben sind oder verlaufen, verbunden sein. Vorteilhaft ist sie dies an einer einzigen stromaufwärts gelegenen Außenkante, insbesondere bei einer rechteckigen Klappe. Dadurch kann die Verschlussklappe nach oben bzw. in den Kanal hinein bewegbar ausgebildet werden. So kann es ermöglicht werden, dass die Verschlussklappe nicht nur die Öffnung freigibt, um so die durch die Verwirbelung aus der strömenden Flüssigkeit herausgesammelten Gegenstände entfernen zu können. Dabei kann zwar auch einiges an Flüssigkeit mit austreten, dies stört aber nicht. Vielmehr kann die Verschlussklappe selbst, wenn sie weit genug absteht bzw. in die Flüssigkeitsströmung ragt, für Verwirbelungen sorgen bzw. die Verwirbelungsvorrichtung zumindest teilweise oder sogar ganz bilden. Dies ermöglicht eine deutliche bauliche Vereinfachung, und vor allem kann so die Funktion des Sammelns der Gegenstände mit ihrem Entfernen aus der Flüssigkeit heraus kombiniert werden. Nur wenn die Gegenstände entfernt werden sollen macht es Sinn, sie vorher zu sammeln bzw. wird dieser Schritt überhaupt benötigt. Sollen keine Gegenstände oder entsprechende Verunreinigungen entfernt bzw. sozusagen herausgefiltert werden so kann die Verschlussklappe die Öffnung geschlossen halten und die Flüssigkeit kann ungehindert und ohne Verwirbelungen, zumindest ohne künstlich gezielt hervorgerufene Verwirbelungen, weiter strömen.

In einer vorteilhaften Ausgestaltung kann die Verschlussklappe fest an der Wandung angeordnet sein, insbesondere fest und unlösbar damit verbunden sein. Eine Steifigkeit der Verschlussklappe ist entlang der Fließrichtung nachlassend ausgebildet bzw. wird geringer hin zu einer freien Außenkante der Verschlussklappe, welche der an der Wandung fest angeordneten Außenkante gegenüberliegt. Die Verschlussklappe wird also weicher bzw. elastischer hin zu der freien Außenkante bzw. hin zum freien Ende.

In Weiterbildung der Erfindung kann die Verschlussklappe zwei Materialien mit unterschiedlichen Temperaturausdehnungskoeffizienten aufweisen oder daraus bestehen. Die Materialien können als Flächen oder in flächiger Ausbildung flächig miteinander verbunden sein. Dabei kann eine erste Fläche aus einem Material mit einem höheren Temperaturausdehnungskoeffizienten zur Außenseite des Kanals bzw. zur Öffnung hin bestehen. Eine zweite Fläche kann aus einem Material mit einem niedrigeren Temperaturausdehnungskoeffizienten zur Innenseite des Kanals bzw. von der Öffnung weg vorgesehen sein. Wie bei einem Bimetall-Effekt kann eine ansteigende Temperatur die erste Fläche sich stärker ausdehnen lassen als die zweite Fläche, wodurch sich die Verschlussklappe verformt bzw. biegt. Dadurch wird zum Einen die Öffnung geöffnet bzw. zumindest teilweise freigegeben. Zum Anderen steht die Verschlussklappe zunehmend in die strömende Flüssigkeit und bildet so die genannte Verwirbelungsvorrichtung mit einer Wirkung zur Verwirbelung, die einstellbar bzw. beeinflussbar ist dadurch, wie weit sich die Verschlussklappe verformt. Dies hängt wiederum von der Temperatur ab.

In Ausgestaltung der Erfindung kann ein Umgebungsmaterial zwischen der Einlass-Leitung und der Auslass-Leitung, das an die beiden Leitungen angrenzt, fluiddurchlässig sein, so dass Flüssigkeit hindurchgehen kann. Es ist aber vorteilhaft nicht wie ein offener Kanal, insbesondere nicht für einen starken Durchfluss ausgelegt. Besonders vorteilhaft ist das Umgebungsmaterial porös bzw. ist poröses Material zwischen Einlass-Leitung und Auslass-Leitung vorgesehen, grenzt also nicht nur an eine der beiden Leitungen an. Bevorzugt ist das Umgebungsmaterial gleichmäßig fluiddurchlässig bzw. porös, vorzugsweise nach Art eines Schwamms. Eine Porengröße liegt besonders bevorzugt unter 2 mm, vorzugsweise unter 0,5 mm oder sogar unter 0,1 mm.

So kann eine gewisse Menge an Flüssigkeit durch dieses fluiddurchlässige Umgebungsmaterial hindurchgehen, was sich zum Einen positiv auf die Beruhigung der Durchströmung der Sensorkammer auswirken kann. Zum Anderen kann es dadurch ermöglicht werden, dass in das Umgebungsmaterial ein Zusatzstoff eingebracht ist, der bei Durchströmung des Umgebungsmaterials mit der Flüssigkeit damit vermischt wird, also aus dem Umgebungsmaterial austritt und in die Flüssigkeit eingemischt wird. Eine Dosierung kann ggf. sehr gering sein, was vorteilhaft genutzt werden kann zum Zudosieren von sehr geringen Mengen des Zusatzstoffs. Der Zusatzstoff kann zum Beispiel ein Enzym oder allgemein eine waschaktive Substanz sein, die in deutlich geringerer Menge als ein Waschmittel oder ein Weichspüler zudosiert werden soll.

In weiterer Ausgestaltung der Erfindung kann eine vorgenannte Zugangsöffnung von außerhalb der Sensorvorrichtung zu dem Umgebungsmaterial bzw. dem porösen Material vorgesehen sein. Dabei kann insbesondere eine Art Kammer innerhalb des Umgebungsmaterials vorgesehen sein, die von der Einlass-Leitung, der Auslass-Leitung, der Quer-Leitung und der Sensorkammer durch mindestens das Umgebungsmaterial getrennt ist oder sogar abgedichtet ist. Diese Zugangsöffnung zu der Kammer kann verschließbar sein, so dass darin befindliche Zusatzstoffe geschützt sind und nicht verdunsten können, wenn sie in flüssiger Form vorliegen. So kann ein Einbringen des Zusatzstoffs in das Umgebungsmaterial bzw. poröse Material erleichtert werden. Es kann ganz allgemein auch eine gesamte Einheit aus Umgebungsmaterial bzw. porösem Material in einem Stück ausgetauscht werden, wenn sie mit einem Zusatzstoff versetzt ist bzw. diesen enthält, der über die Zeit abgegeben werden kann. Nach einer bestimmten Zeit ist der Zusatzstoff verbraucht, und das gesamte poröse Material kann ausgetauscht werden, so dass neuer Zusatzstoff vorhanden ist und der Flüssigkeit zugemischt werden kann.

Für den mindestens einen Sensor an oder in der Sensorkammer gibt es viele Möglichkeiten, grundsätzlich können es alle Arten von Sensoren sein, die in wasserführenden Haushaltsgeräten, insbesondere in Waschmaschinen oder auch Geschirrspülern, einsetzbar sind. Der mindestens eine Sensor kann ausgewählt sein aus der Gruppe pH-Sensor, Temperatursensor, Biosensor für bakteriologische Verunreinigung, optische Sensoren, Trübungssensor, Spektrometer, Farbumschlagssensor, Tensidsensor, Leitwertsensor, Hydrometer bzw. Sedimentations-Sensor. Ein Sensor kann vorteilhaft im oberen Bereich der Sensorkammer angeordnet, insbesondere an einem höchsten Punkt der Sensorkammer. Andere oder weitere Sensoren können auch mitten in der Sensorkammer angeordnet sein, also möglichst innerhalb der Flüssigkeit, oder am Boden der Sensorkammer.

Es können auch elektrische Sensoren vorgesehen sein, insbesondere in der Sensorkammer oder auch in der Einlass-Leitung oder der Auslass-Leitung. Elektrische Sensoren wie Widerstandssensoren sind in der Regel auch bei unruhigen Strömungsverhältnissen schnell und genau genug für eine ausreichend präzise Messung, so dass sie nicht unbedingt in der beruhigten Sensorkammer angeordnet sein müssen.

In nochmals weiterer Ausgestaltung der Erfindung kann eine eingangs genannte Zugangsöffnung an der Sensorvorrichtung auch für Analysestoffe vorgesehen sein, vorteilhaft zusätzlich oder alternativ zu der vorgenannten Zugangsöffnung für Zusatzstoffe. Sie kann in Fließrichtung vor, in oder hinter der Sensorkammer angeordnet sein. Insbesondere ist sie nicht an dem möglichen Umgebungsmaterial vorgesehen, so dass sie die Analysestoffe nach Möglichkeit nur direkt an die Sensoren abgibt bzw. an Flüssigkeit, die direkt zu den Sensoren fließt.

Eine Verwendung der Sensorvorrichtung erfolgt erfindungsgemäß in einem wasserführenden Gerät, insbesondere einem Haushaltgerät, vorzugsweise in einer Waschmaschine oder in einem Geschirrspüler. Dort können vielfältige Analysen durchgeführt werden, die einen jeweiligen Vorgang optimieren helfen können. In einer Waschmaschine kann ein separater Sensor-Flüssigkeitskreislauf mit einer Sensor-Flüssigkeitsleitung hin zu der Sensorvorrichtung vorgesehen sein, welche vorzugsweise auch von der Sensorvorrichtung wegführen kann.

Eine Waschmaschine bzw. ein Geschirrspüler kann eine Zusatz-Pumpe aufweisen, die zusätzlich zu einer Haupt-Pumpe vorgesehen ist, wie sie üblicherweise in einem solchen Gerät vorgesehen ist um Flüssigkeit beim Waschvorgang bzw. Reinigungsvorgang in dem Gerät umzuwälzen bzw. zu zirkulieren. Die Zusatz-Pumpe kann Flüssigkeit zu der Sensorvorrichtung pumpen, insbesondere zwischen einer Trommel, einer Heizvorrichtung, der Sensorvorrichtung und einem Wassereinlauf in die Trommel bewegen bzw. fördern. Eine Zuleitung kann bevorzugt von der Zusatz-Pumpe direkt zu der Sensorvorrichtung verlaufen. So kann mittels der Zusatz-Pumpe der Betrieb der Sensorvorrichtung beeinflusst werden oder zumindest ihre Versorgung mit zu untersuchender Flüssigkeit.

Vorteilhaft kann die Sensorvorrichtung an oder in einer aus der Waschmaschine entnehmbaren Vorrichtung mit Waschmittelzugabe angeordnet sein, die vorzugsweise nach Art einer ausziehbaren Schublade ausgebildet ist. Die Sensorvorrichtung kann dann zwar damit verbunden sein und sogar eine Baueinheit bilden, bevorzugt aber auch davon getrennt oder abmontiert werden. Alternativ kann die Sensorvorrichtung auch getrennt von der entnehmbaren Vorrichtung angeordnet sein, beispielsweise darüber. Sie sollte aber auf alle Fälle zugänglich sein, entweder einfach werkzeuglos oder mittels Montagearbeiten.

Alternativ kann die Sensorvorrichtung fest in der Waschmaschine angeordnet sein, wobei sie allgemein auf einer Höhe oberhalb der Trommel der Waschmaschine angeordnet sein sollte. Dann sollte sie von außen zugänglich sein, beispielsweise zur Wartung oder auch zum Nachfüllen von Zusatzstoffen und/oder Analysestoffen.

Bevorzugt weist die Zusatz-Pumpe Heizmittel auf, besonders bevorzugt auch eine Temperaturüberwachung zur Bestimmung der Temperatur der Flüssigkeit in Fließrichtung hinter der Zusatz-Pumpe. So kann sie die Flüssigkeit auf eine genau vorgebbare Temperatur aufheizen.

Hinter oder nach der Sensorvorrichtung kann eine Flüssigkeitsleitung in eine Trommel oder in einen Sumpf der Waschmaschine führen. Vorteilhaft erfolgt dies direkt oder geschickterweise über die vorgenannte Schublade für Waschmittel. Dann ist eine vereinfachte Ausbildung der Leitungen möglich. Und wenn die Sensorvorrichtung in der Nähe der Schublade angeordnet ist, vorteilhaft daran und/oder darüber, so kann Flüssigkeit aus der Sensorvorrichtung sehr einfach abgeführt werden und ggf. auch wieder in den Waschkreislauf eingebracht werden, beispielsweise nachdem vorgenannte Zusatzstoffe beigemischt worden sind.

Der Sensor-Flüssigkeitskreislauf kann an einem Sumpf bzw. an einer Trommel der Waschmaschine beginnen bzw. dort kann ein Einlauf in den Sensor-Flüssigkeitskreislauf vorgesehen sein, vorzugsweise hin zu der Zusatz-Pumpe. Der Abstand der Zusatz-Pumpe zu dem Sumpf kann gering sein, vorteilhaft mit maximal 20 cm Leitung dazwischen, so dass die Zusatz-Pumpe relativ weit unten angeordnet sein kann.

In Ausgestaltung der Erfindung kann in die Sensorvorrichtung Frischwasser von einer Frischwasserzufuhr zugeführt werden. Dies kann zusätzlich oder alternativ zu der Versorgung mit Waschwasser mittels der vorgenannten Zusatz-Pumpe möglich sein. Diese Zufuhr kann vorzugsweise mittels eines Ventils absperrbar sein. Diese Frischwasserzufuhr zur Sensorvorrichtung hin kann mit einer eigenen Frischwasserleitung erfolgen ähnlich wie zu einer vorgenannten Schublade.

Mit einem erfindungsgemäßen Verfahren kann eine Flüssigkeit mit einer zuvor beschriebenen Sensorvorrichtung und/oder mit einer zuvor beschriebenen Waschmaschine untersucht werden. Dabei kann eine Durchströmung der Sensorvorrichtung, insbesondere des Haupt-Kanals der Sensorvorrichtung, mit Flüssigkeit derart eingestellt werden, dass in der Sensorkammer zwar Flüssigkeit enthalten ist, diese aber nicht oder nur wenig bewegt wird. Dabei sollte zumindest etwas Flüssigkeit dort verbleiben, die dann untersucht wird. Durch Anordnung der Sensorkammer innerhalb der Sensorvorrichtung, insbesondere hinsichtlich ihrer Höhenlage im Vergleich zur Einlass-Leitung und Auslass-Leitung, kann eingestellt werden, dass sie stets zumindest teilweise mit Flüssigkeit gefüllt ist, auch wenn die Flüssigkeit nicht fließt bzw. durch die Sensorvorrichtung strömt. Alternativ kann die Sensorkammer so angeordnet sein, dass sie selbstentleerend ist wenn die Flüssigkeit nicht fließt bzw. durch die Sensorvorrichtung strömt. Dann können Verunreinigungen durch stehendes Wasser in der Sensorkammer und vor allem an den Sensoren vermieden werden.

Vorteilhaft wird für eine Untersuchung die Durchströmung der Sensorvorrichtung und insbesondere des Haupt-Kanals mit Flüssigkeit derart eingestellt, dass sich an der Auslass-Öffnung ein Venturi-Effekt ergibt derart, dass zur Einlass-Öffnung in die Einlass-Leitung eintretende Flüssigkeit durch die Auslass-Öffnung von der Auslass-Leitung in den Haupt-Kanal hinein abgesaugt wird. Dies ist zuvor erläutert worden.

In Ausgestaltung der Erfindung kann in Intervallen, insbesondere zu vorgegebenen Zeiten zwischen 1 Minute und 10 Stunden während der Betriebszeit, eine Temperatur in der strömenden Flüssigkeit bei der Sensorvorrichtung in dem zuvor beschriebenen Gerät derart erhöht werden, dass die vorgenannte Verschlussklappe der Sensorvorrichtung verformt wird zum Öffnen und zum Freigeben der Auslassöffnung. Möglicherweise kann dabei auch die Verschlussklappe selbst die genannten Verwirbelung der strömenden Flüssigkeit bewirken und somit auch das Sammeln der Verunreinigungen bzw. Partikel dahinter bewirken, welches das anschließende Entfernen durch die Öffnung als Auslass ermöglicht.

Vorteilhaft kann die Durchströmung der Sensorvorrichtung bzw. des Haupt-Kanals mit Flüssigkeit derart eingestellt werden, dass Flüssigkeit durch das zuvor beschriebene fluiddurchlässige bzw. poröse Umgebungsmaterial fließen kann. Dies kann unter Umständen von der Durchströmung bzw. vor allem von einem Druck der strömenden Flüssigkeit abhängen. Dabei kann ein Zusatzstoff in dem fluiddurchlässigen Umgebungsmaterial herausgelöst und der Flüssigkeit beigemischt werden, wie es zuvor beschrieben worden ist. Besonders vorteilhaft können durch die vorgenannte Zugangs-Öffnung Markerstoffe als Zusatzstoffe über das fluiddurchlässige Umgebungsmaterial in die Wasserführung und in die Flüssigkeit darin gegeben werden.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränkt die unter diesen gemachten Aussagen nicht in ihrer Allgemeingültigkeit.

### Kurzbeschreibung der Zeichnungen

Ausführungsbeispiele der Erfindung sind in den Zeichnungen schematisch dargestellt und werden im Folgenden näher erläutert. In den Zeichnungen zeigen:
- Fig. 1: eine schematische Darstellung einer erfindungsgemäßen Waschmaschine mit einer Wasserführung gemäß dem Stand der Technik und einem zusätzlichen Sensor-Flüssigkeitskreislauf hin zu einer erfindungsgemäßen Sensorvorrichtung,
- Fig. 2: eine Draufsicht auf eine geschnittene Sensorvorrichtung gemäß der Erfindung,
- Fig. 3: einen seitlichen Schnitt gemäß A-A durch die Sensorvorrichtung aus Fig. 2,
- Fig. 4: einen Ausschnitt aus einer weiteren Sensorvorrichtung ähnlich Fig. 2 mit etwas abgewandelter Ausgestaltung einer Wasserführung in der Sensorvorrichtung,
- Fig. 5: eine nochmals weitere Abwandlung einer Sensorvorrichtung in Darstellung ähnlich Fig. 2 mit gebogenem Verlauf,
- Fig. 6: eine Draufsicht auf eine Verwirbelungsvorrichtung in einem Haupt-Kanal vor der Sensorvorrichtung oder in der Sensorvorrichtung,
- Fig. 7: eine Vergrößerung der Fig. 6 mit Darstellung der verwirbelten Flüssigkeit,
- Fig. 8: eine Seitenansicht der Anordnung aus Fig. 7 mit einem Vorsprung zur Erzeugung der Verwirbelung und einer dahinter vorgesehenen Auslass-Öffnung samt Verschlussklappe,
- Fig. 9: die Verschlussklappe aus Fig. 8 alleine in Detaildarstellung und
- Fig. 10: eine alternative Ausgestaltung einer Verwirbelungsvorrichtung ohne separaten Vorsprung, bei der eine nach oben bewegbare Verschlussklappe die Verwirbelungen bewirkt.

### Detaillierte Beschreibung der Ausführungsbeispiele

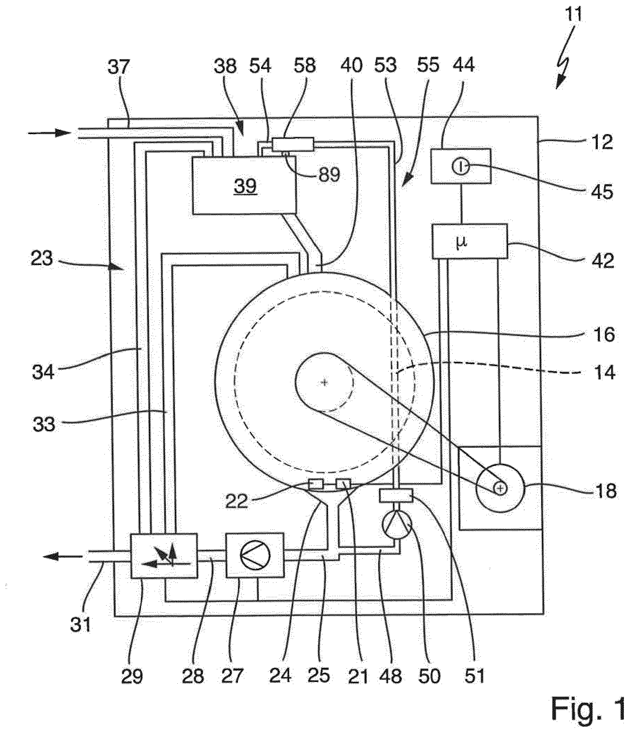

Die Fig. 1 zeigt eine schematische Darstellung einer erfindungsgemäßen Waschmaschine 11 mit einem Gehäuse 12, in dem eine Trommel 14 in einem Trommelgehäuse 16 auf übliche Art und Weise angeordnet ist. Ein Antriebsmotor 18 ist für die Trommel 14 vorgesehen, der auf übliche Art und Weise angesteuert wird und dazu entsprechend mit Leistung versorgt wird. Unten in dem Trommelgehäuse 16 bzw. in einem Sumpf 24 sind eine Heizung 21 sowie ein Temperatur-Sensor 22 vorgesehen. Diese dienen hauptsächlich dazu, das Wasser in dem Trommelgehäuse 16 und somit das Wasser zum Waschen auf eine bestimmte vorgegebene Temperatur zu bringen und diese gegebenenfalls zu halten.

Die Waschmaschine 11 weist eine Kreislauf-Führung 23 für das Wasser während des Betriebs bzw. eines Waschvorgangs auf. Dazu führt von dem Sumpf 24 eine Sumpf-Leitung 25 nach unten und nach links zu einer Pumpe 27. Diese ist vorteilhaft eine Umwälzpumpe für die Waschmaschine 11 und kann beispielsweise entsprechend der DE 10 2013 211 180 A1 ausgebildet sein. Sie kann eine separate oder eine integrierte Heizeinrichtung aufweisen, um das geförderte Wasser anstelle mit der Heizung 21 auf eine bestimmte Temperatur aufzuheizen.

Hinter der Pumpe 27 ist eine Pumpen-Leitung 28 hin zu einer Ventileinrichtung 29 vorgesehen, die den Flüssigkeitsstrom sozusagen verteilen kann. Von der Ventileinrichtung 29 geht nach links eine Abwasserleitung 31 ab hin zu einem Ausfluss aus der Waschmaschine 11 bzw. in die Kanalisation. Des Weiteren geht von der Ventileinrichtung 29 eine Zirkulations-Leitung 33 nach oben ab, die von oben wieder direkt in das Trommelgehäuse 16 führt. So kann Wasser während des Waschvorgangs direkt zirkulieren, und zwar durch die Trommel 14 hindurch.

Des Weiteren geht von der Ventileinrichtung 29 eine Schubladen-Leitung 34 nach oben ab, die in eine oben in der Waschmaschine 11 angeordnete Schublade 39 führt. Die Schublade 39 kann gemäß dem Stand der Technik ausgebildet sein und mehrere Fächer zum Einfüllen von Waschmitteln und/oder Zusatzstoffen wie Weichspüler odgl. aufweisen. Sie kann auch gemäß der PCT/EP 2017/077358 mit Anmeldetag vom 25. Oktober 2017 derselben Anmelderin ausgebildet sein und Sensoren und/oder Filter enthalten. Eine Filterung in der Schublade 39 kann entsprechend der PCT/EP 2017/077357 mit Anmeldetag vom 25. Oktober 2017 vorgesehen sein. In diese Schublade 39 bzw. zu ihr hin führt von außen noch eine Frischwasser-Leitung 37. Die Schublade 39 bildet somit Teil eines Verteilsystems 38. Unten von der Schublade 39 geht eine Schubladen-Leitung 40 in das Trommelgehäuse 16, um so die mit zirkulierendem Wasser oder Frischwasser ausgespülten und mitgenommenen Zusatzstoffe oder Waschmittel aus der Schublade 39 in die Trommel 14 und somit in den Waschvorgang zu bringen.

Von der Sumpf-Leitung 25 geht nach rechts eine Abzweig-Leitung 48 ab, die zu einer Pumpe 50 führt. Diese Pumpe 50 kann grundsätzlich beliebig ausgebildet sein, insbesondere auch als Impellerpumpe. Hinter ihr können Heizmittel 51 vorgesehen sein, die aber, ähnlich wie zu der Pumpe 27 beschrieben, auch in die Zusatz-Pumpe 50 integriert sein können. Über eine Sensor-Leitung 53 kann Wasser aus dem Sumpf 24 separat von der Kreislauf-Führung 23 nach oben gepumpt werden. Die Sensor-Leitung 53 mündet in eine Sensorvorrichtung 58 gemäß der Erfindung, die nachfolgend noch näher erläutert wird. Von der Sensorvorrichtung 58 geht nach links eine Sensor-Einleitung ab, die in die Schublade 39 führt. Unten von der Sensorvorrichtung 58 geht ein Auslass 89 nach unten ab, wobei der Auslass 89 vorteilhaft von der Wasserführung her gleich zu Beginn der Sensorvorrichtung 58 angeordnet ist und von dieser abgeht. Details zu der Sensorvorrichtung 58 werden noch im Zusammenhang mit den weiteren Figuren erläutert.

Die Waschmaschine 11 weist eine Waschmaschinensteuerung 42 auf, vorteilhaft mit einem Controller bzw. Mikroprozessor versehen. Die Waschmaschinensteuerung 42 ist mit dem Antriebsmotor 18, der Pumpe 27, der Heizung 21, dem Temperatursensor 22, der Ventileinrichtung 29 sowie mit der Zusatz-Pumpe 50 und den Heizmitteln 51 verbunden. Des Weiteren ist die Waschmaschinensteuerung 42 auf nicht dargestellte Art und Weise natürlich auch mit der Sensorvorrichtung 58 verbunden, entweder durch ein Kabel oder drahtlos. Dann sollte in der Sensorvorrichtung 58 eine Energieversorgung in Form einer Batterie sowie eine drahtlose Kommunikationseinrichtung, insbesondere eine Funkeinrichtung, an die Waschmaschinensteuerung 42 vorgesehen sein. Außerdem ist die Waschmaschinensteuerung 42 mit einer Bedieneinrichtung 44 verbunden, die unter anderem einen Ein-Schalter sowie weitere Bedienelemente aufweist. Die Waschmaschinensteuerung 42 ist auch dazu ausgebildet, Sensoren in der Sensorvorrichtung 58 anzusteuern und/oder auszuwerten sowie insgesamt den Einsatz der Sensorvorrichtung zu steuern.

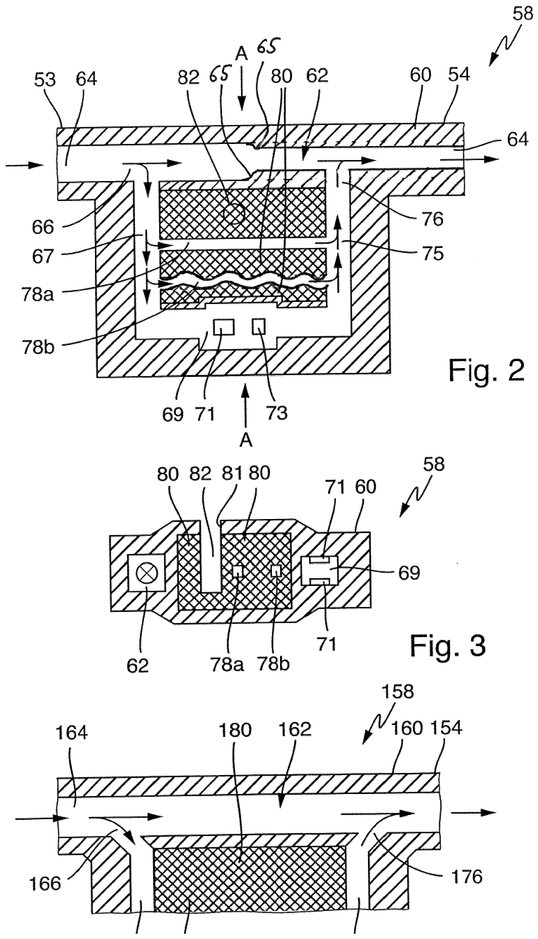

In der Fig. 2 ist eine erfindungsgemäße Sensorvorrichtung 58 von oben in Vergrößerung und im Detail dargestellt, wie sie an die Sensor-Leitung 53 von links kommend angeschlossen ist. Nach rechts ist sie mit der Sensor-Einleitung 54 verbunden. Die Sensorvorrichtung 58 weist ein Gehäuse 60 auf, vorteilhaft bestehend aus Kunststoff. Das Gehäuse 60 und möglicherweise die Sensorvorrichtung 58 bis auf Sensoren können insbesondere additiv und in einem Stück hergestellt sein, entweder durch Spritzguss oder vorteilhaft durch 3D-Drucken. In dem Gehäuse 60 ist allgemein eine Wasserführung 62 ausgebildet mit mehreren Kanälen und Leitungen. Von links bzw. von der Sensor-Leitung 53 kommend ist ein Haupt-Kanal 64 vorgesehen. Dieser weist in der Fig. 2 eine Einlass-Öffnung 66 auf, die als eine Art Abzweigung angesehen werden kann, an welche sich eine Einlass-Leitung 67 anschließt. Diese Einlass-Leitung 67 ist sozusagen Teil einer U-Form und bildet dabei deren linken vertikalen Schenkel. Unten macht sie eine Abbiegung nach rechts und führt in eine erweiterte Sensorkammer 69, so dass hier in etwa die Basis der U-Form gebildet wird. In der Sensorkammer 69 können ganz allgemein verschiedene Sensoren angeordnet sein, hier sind es ein Trübungssensor 71 und ein pH-Sensor 73.

Von der Sensorkammer 69 führt dann eine Auslass-Leitung 75 heraus und mit einer Abbiegung wieder zurück zum Haupt-Kanal 64, so dass diese Auslass-Leitung 75 den rechten vertikalen Schenkel der U-Form ergibt mit der Sensorkammer 69 als Basis. Über eine Auslass-Öffnung 76 kann Flüssigkeit dann wieder in den Haupt-Kanal 64 hineinströmen. Der Haupt-Kanal 64 selbst ist etwa auf halber Länge mit einer Einschnürung 65 als Querschnittsverringerung versehen. Auch dadurch kann eine zuvor genannte verwirbelte Strömung erzeugt werden, falls dies gewünscht ist, ggf. auch eine Strömungsgeschwindigkeit erhöht werden. Die Querschnittsfläche wird hier an der Einschnürung 65 in etwa halbiert.

Wie aus dem bis hier beschriebenen Teil der Sensorvorrichtung 58 erkannt werden kann, strömt Flüssigkeit bzw. Wasser auch in der hauptsächlichen Richtung des Haupt-Kanals 64 geradeaus hindurch. Durch einen sich ergebenden Venturi-Effekt an der Auslass-Öffnung 76 wird Flüssigkeit dort angesaugt, welche vorne an der Einlass-Öffnung 66 sozusagen abgezweigt und angesaugt wird und dann durch die Einlass-Leitung 67 und die Sensorkammer 69 sowie durch die Auslass-Leitung 75 fließt. Auf diese Art und Weise kann Flüssigkeit durch die Sensorkammer 69 geführt werden. Allerdings ist offensichtlich, dass dann die Flüssigkeit in der Sensorkammer 69 nicht vollständig zur Ruhe kommt bzw. weiter hindurchströmt, solange im Haupt-Kanal 64 ein Flüssigkeitsstrom fließt.

Deswegen sind in einem hier sozusagen umspülten Mittelbereich zwei Quer-Leitungen 78a und 78b zwischen Einlass-Leitung 67 und Auslass-Leitung 75 vorgesehen, es könnten auch nur eine und aber vor allem auch mehr sein. Ihr Querschnitt ist hier deutlich geringer als derjenige der beiden genannten Leitungen, hierzu wird auch auf die Fig. 3 verwiesen mit besserer Darstellung desselben. Die Quer-Leitungen 78a und 78b bewirken, dass eine Art Flüssigkeits-Bypass parallel zur Sensorkammer 69 erzeugt wird und somit die durch den genannten Venturi-Effekt angesaugte Flüssigkeit hauptsächlich durch diese Quer-Leitungen fließt und nicht so sehr bzw. nicht ausschließlich durch die Sensorkammer 69. Durch die genaue Gestaltung der Wasserführung 62 innerhalb der Sensorvorrichtung 58, insbesondere durch die Querschnitte der Einlass-Leitung 67, der Auslass-Leitung 75, der Quer-Leitungen 78a und 78b sowie der Sensorkammer 69 selbst kann der besonders vorteilhafte Effekt erreicht werden, dass zumindest bei einer bestimmten Durchströmung des Haupt-Kanals 64 zwar Flüssigkeit an der Auslass-Öffnung 76 angesaugt wird, diese aber sozusagen hauptsächlich durch die Quer-Leitungen 78a und 78b fließt. In der Sensorkammer 69 kann dann die Durchströmung reduziert sein, insbesondere ohne Verwirbelungen oder Turbulenzen. Erfindungsgemäß kann die Sensorkammer 69 sogar weitgehend oder ganz strömungsfrei sein. Dann ist eine Untersuchung der dort vorhandenen Flüssigkeit mit den dort angeordneten Sensoren 71 und 73 möglich, beispielsweise als Trübungssensor 71 und pH-Sensor 73. Vor allem ein genannter Trübungssensor 71 kann dann besonders gut arbeiten, beispielsweise weil sich auch gewisse Inhaltsstoffe zumindest teilweise in der Flüssigkeit absetzen können. So könnten auch beispielsweise Sedimentations-Sensoren vorgesehen sein.

Deutlich erkennbar unterscheiden sich die beiden Quer-Leitungen 78a und 78b zwar nicht hinsichtlich ihrer Querschnittsfläche, aber hinsichtlich ihres Verlaufs. Die obere Quer-Leitung 78a verläuft gerade, die untere Quer-Leitung 78b verläuft mäandernd wie eingangs beispielhaft genannt. Durch die so entstehenden Wirbel bzw. Turbulenzen wird in der unteren Quer-Leitung 78b die Strömungsgeschwindigkeit verringert, was ebenfalls vorteilhaft genutzt werden kann, beispielsweise zur wichtigen Beeinflussung bzw. Reduzierung der Durchströmung in der Sensorkammer 69.

Des Weiteren ist aus der Fig. 2 zu ersehen, dass ein Hauptteil des Gehäuses 60 der Sensorvorrichtung 58 aus Kunststoff bestehen kann und wasserundurchlässig sein kann, insbesondere auch stabil und lichtundurchlässig. Im von der Wasserführung 62 umströmten Mittelbereich, insbesondere an den Quer-Leitungen 78a und 78b, kann eingangs erläutertes poröses Material 80 vorgesehen sein, hier dargestellt durch die Kreuzschraffierung. Dieses poröse Material 80 kann beispielsweise nach Art eines Schwamms oder Schaummaterials ausgebildet sein. Derartige Materialien sind auch durch den vorgenannten 3D-Druck herstellbar. Somit ist das poröse Material 80 in gewissem Umfang wasserdurchlässig, allerdings nur in etwa derart, dass Wasser hindurchtreten kann, aber sich keine wirkliche Strömung ergibt. Diese Wasserdurchlässigkeit des porösen Materials 80 kann auch dazu dienen, bei der vorgenannten bestimmten Durchströmung des Haupt-Kanals die Flüssigkeit in der Sensorkammer 69 zu beruhigen oder sie weitgehend strömungsfrei zu machen. Darüber hinaus kann aufgrund der relativ geringen Durchströmung des porösen Materials 80 auch vorgesehen sein, dass darin bestimmte weitere Zusatzstoffe enthalten sind, die somit ganz allmählich und vor allem auch in geringem Umfang, abhängig von der Art bzw. Dauer der Durchströmung der Sensorvorrichtung 58, gelöst und der hindurchströmenden Flüssigkeit beigemischt werden können. Dies können beispielsweise Marker oder waschaktive Substanzen mit Enzymen sein oder andere Stoffe, die auf dem Gebiet des Waschens, insbesondere mit modernen Methoden bzw. modernen Waschmitteln, bekannt sind.

Zusätzlich ist es auch möglich, dass von oben eine Kammer 82 in dem porösen Material 80 vorgesehen ist, vorteilhaft mehrere solcher Kammern 82. Die seitliche Schnittdarstellung entsprechend dem Schnitt A-A nach Fig. 3 zeigt, dass diese Kammer 82 oben mit einer Zugangs-öffnung 81 versehen ist, die dicht verschlossen werden kann. Somit können in die Kammer 82 von oben bestimmte Zusatzstoffe eingefüllt werden, und zwar in beliebiger Form, also flüssig, fest oder pulverförmig. Da die Kammer 82 direkt mit der Flüssigkeit in Berührung kommt bzw. die Flüssigkeit durch das poröse Material 80 hindurch auch an die Kammer 82 kommt, kann permanent etwas von dem dort eingebrachten Zusatzstoff ausgewaschen oder mitgenommen werden. Diese Art der Zudosierung kann beeinflusst werden durch Ausgestaltung der Porosität bzw. Durchlässigkeit des porösen Materials 80, die Leitungsquerschnitte bzw. die offenen Flächen des porösen Materials 80 sowie die Art, wie der Zusatzstoff in die Kammer 82 eingebracht wird. Es kann ganz allgemein auch die gesamte Einheit des porösen Materials 80 als eine Art Block odgl. bzw. in einem Stück ausgetauscht werden, wenn es durchgängig bzw. vollständig mit einem Zusatzstoff versetzt ist, so dass der Zusatzstoff über die Zeit abgeben kann. Nach einer bestimmten Zeit ist der Zusatzstoff verbraucht, und die gesamte Einheit des porösen Materials 80 kann ausgetauscht werden, so dass wieder neuer Zusatzstoff vorhanden ist und in die Flüssigkeit eingemischt werden kann.

Ist die Sensorvorrichtung 58 gemäß der Fig. 1 wie vorbeschrieben erläutert an der Schublade 39 angeordnet, so kann sie mit dieser aus der Waschmaschine 11 entnommen bzw. herausgezogen werden. So kann eine Bedienperson selbst auch den Zusatzstoff eventuell nachdosieren, entweder in bestimmten Zeitabständen, nach einer bestimmten Anzahl von Waschvorgängen oder weil es die Waschmaschine 11 selbst misst, beispielsweise auch durch einen der Sensoren in der Sensorkammer 69.

In der Fig. 4 ist eine Variante einer Sensorvorrichtung 158 ausschnittsweise dargestellt mit einem Gehäuse 160 und einer Wasserführung 162 darin. Das Besondere hier ist, dass im Sensorgehäuse 160 die Einlass-Öffnung 166 sozusagen schräg zur Strömungsrichtung geneigt vom Haupt-Kanal 164 abgeht. So kann sozusagen etwas mehr Flüssigkeit in die Einlass-Leitung 167 einströmen. Ebenso ist der Übergang der Auslass-Öffnung 176 in den Haupt-Kanal 164 kurz vor einer Sensor-Einleitung 154 gespiegelt nach rechts schräg ausgebildet, wodurch der beschriebene Venturi-Effekt beeinflusst und vor allem verstärkt werden kann. Hinter der Einlass-Öffnung 166 und vor der Auslass-Öffnung 176 sind jeweils Einlass-Leitung 167 und Auslass-Leitung 175 vorgesehen, die wiederum verlaufen wie in Fig. 2 dargestellt bzw. parallel verlaufen. Bei dieser Ausgestaltung der Sensorvorrichtung 158 wird voraussichtlich eine stärkere Durchströmung der Sensorvorrichtung 158 erreicht, insbesondere mit stärkerer Einströmung von Flüssigkeit in die Wasserführung 162 bzw. hin zu den Quer-Leitungen und einer Sensorkammer.

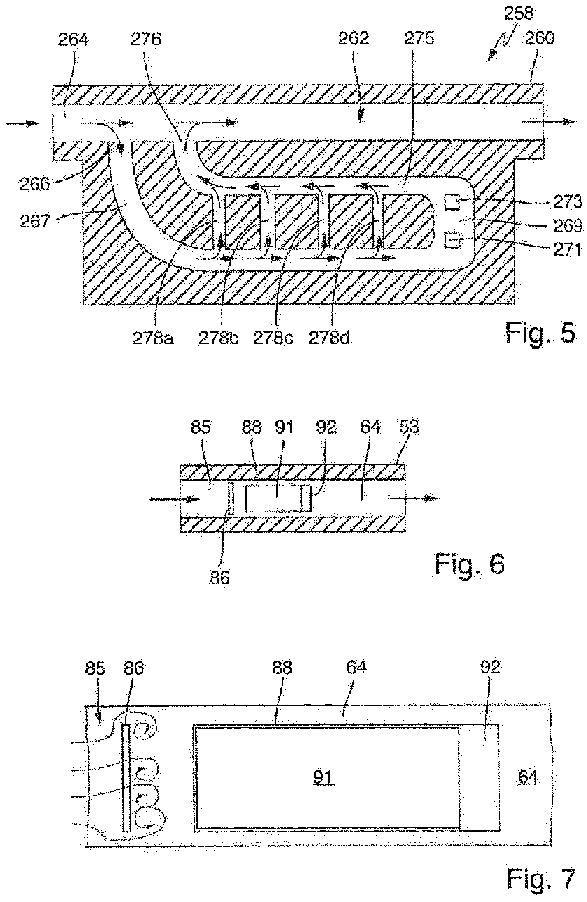

In der Fig. 5 ist eine nochmals weitere Abwandlung einer Sensorvorrichtung 258 mit einem Gehäuse 260 in Draufsicht dargestellt samt Wasserführung 262. Von einem Haupt-Kanal 264 geht nach unten eine Einlass-Öffnung 266 ab in eine Einlass-Leitung 267. Dabei ist diese Einlass-Leitung 267 gekrümmt und verläuft hinter dem Krümmungsbereich geradlinig und insbesondere parallel zum Haupt-Kanal 264. Sie führt zu einer Sensorkammer 269 mit Sensoren 271 und 273 darin. Dann schließt sich eine Auslass-Leitung 275 daran an, erst wieder parallel dazu, und dann mit einer kurzen Biegung hin zu einer Auslass-Öffnung 276, die wiederum in den Haupt-Kanal 264 führt.

In der Fig. 5 ist zu erkennen, dass Einlass-Leitung 267 und Auslass-Leitung 275 wiederum in etwa parallel zueinander verlaufen, allerdings zuerst eben gekrümmt. Somit ist der Bereich der Wasserführung 262, in dem vier Quer-Leitungen 278a bis 278d zwischen Einlass-Leitung 267 und Auslass-Leitung 275 verlaufen, weitgehend parallel zur Richtung des Haupt-Kanals 264 und nicht rechtwinklig dazu wie bei der Fig. 2. Auch durch die somit erreichbare unterschiedliche Länge von Einlass-Leitung 267 und Auslass-Leitung 275 kann die Durchströmung der Wasserführung 262 bzw. der Sensorvorrichtung 258 beeinflusst werden, so dass möglichst bei mindestens einer bestimmten Durchströmung die Sensorkammer 269 strömungsfrei gehalten werden kann. Es ist auch zu ersehen, dass die Einlass-Leitung 267 länger ist als die Auslass-Leitung 275, und zwar etwa 10 % bis 20 %.

Der Aspekt, dass die Sensorkammer der Sensorvorrichtung bei mindestens einer Durchströmung möglichst strömungsfrei gehalten werden soll, kommt daher, dass dann auch bei hindurchfließender Flüssigkeit, die von der Zusatz-Pumpe 50 gemäß Fig. 1 gepumpt wird, mit den Sensoren gemessen werden kann. Diese Zusatz-Pumpe 50 kann nämlich zusätzlich dazu verwendet werden, Flüssigkeit, insbesondere aus dem Sumpf 24, in die Schublade 39 zu bringen zum gezielten Ausspülen von Waschmitten und/oder Zusatzstoffen hinein in die Trommel 14 über die Schubladen-Leitung 40. Dies ist vor allem dann von Vorteil, wenn beispielsweise die Schubladen-Leitung 34 nicht vorgesehen ist oder aber die Pumpe 27 nicht betrieben werden soll, sondern eben nur die Zusatz-Pumpe 50. Des Weiteren kann mittels der Sensor-Einleitung 54 Wasser auch an andere Stellen der Schublade 39 oder an andere Fächer der Schublade gebracht werden, an welche die Schubladen-Leitung 34 möglicherweise nicht geführt ist. Durch die strömungsberuhigte oder strömungsfreie Sensorkammer kann also selbst bei diesem Pumpbetrieb noch die gepumpte Flüssigkeit untersucht werden.

Eine Querschnittsfläche von Einlass-Leitung 67 und/oder Auslass-Leitung 75 kann beispielsweise zwischen 1 mm² und 10 mm² liegen, abhängig davon, wie groß die Sensorvorrichtung 58 sein darf oder soll, insbesondere abhängig davon, wie viele Sensoren in der Sensorkammer 69 angeordnet werden sollen. Möglicherweise kann eine Querschnittsfläche der Einlass-Leitung 67 auch größer sein als diejenige der Auslass-Leitung 75 oder zumindest auf die Einlass-Öffnung 66 und die Auslass-Öffnung 76 bezogen, wodurch ebenfalls in Verbindung mit den Quer-Leitungen 78a und 78b eine strömungsberuhigte Sensorkammer 69 geschaffen werden kann. Der Unterschied in der Querschnittsfläche kann hier etwa 10 % bis 50 % betragen.

Aus der Schnittdarstellung der Fig. 3 ist noch zu ersehen, dass die Quer-Leitungen 78a und 78b sozusagen mitten durch das poröse Material 80 geführt sind. Somit kann deren Durchspülen oder Durchströmen gut erreicht werden. Es ist auch zu erkennen, wie tief die Kammer 82 für die möglichen Zusatzstoffe reicht, so dass auch sie gut durchspült bzw. angeströmt oder durchströmt werden kann.

Rechts in der Sensorkammer 69 ist zu ersehen, wie ein Trübungssensor 71 zweiteilig ausgebildet ist und sowohl an einer Decke als auch an einem Boden der Sensorkammer 69 vorgesehen sein kann. Für die genaue Ausgestaltung und Anordnung dieses Trübungssensors 71 sowie weiterer Sensoren wird auf den jeweiligen Stand der Technik verwiesen. Auch ein elektrischer Anschluss dieser Sensoren 71 und 73 an die Waschmaschinen-Steuerung 42 ist nicht dargestellt, aber leicht zu realisieren.

Eine Reduzierung der Durchströmung in der Sensorkammer 69 aufgrund der Ausgestaltung der Wasserführung 62, insbesondere mit den Quer-Leitungen 78a und 78b, kann so sein, dass die Durchströmung der Sensorkammer 69 um mindestens 10 % verringert wird, vorzugsweise um mindestens 50 % oder sogar um mindestens 80 %. Die Strömungsgeschwindigkeit von Flüssigkeit durch die Sensorkammer 69 kann also entsprechend diesen Werten reduziert werden, ohne dass mechanische Elemente wie Ventile, Schieber odgl. benötigt werden. So kann eine erfindungsgemäße Sensorvorrichtung 58 möglichst einfach ausgebildet sein und gleichzeitig möglichst zuverlässig funktionieren.

Eine weitere Möglichkeit zur Beeinflussung der Durchströmung in der Sensorkammer 69 sind Stifte oder Zapfen, die von einer seitlichen Kammerwand in die Sensorkammer 69 hineinragen. Sie können allgemein nur von einer Kammerwand in die Sensorkammer 69 hineinragen, beispielsweise entsprechend einem der beiden Teile des Trübungssensors 71 nur von oben oder nur von unten. Dabei können sie mindestens bis zur Mitte reichen, vorteilhaft noch weiter. Alternativ können sie von zwei gegenüberliegenden Kammerwänden hineinreichen wie eben die beiden Teile des Trübungssensors 71. Eine Länge solcher Stifte oder Zapfen ist vorteilhaft größer als ihr Durchmesser, besonders vorteilhaft zweimal so groß bis 10mal so groß.

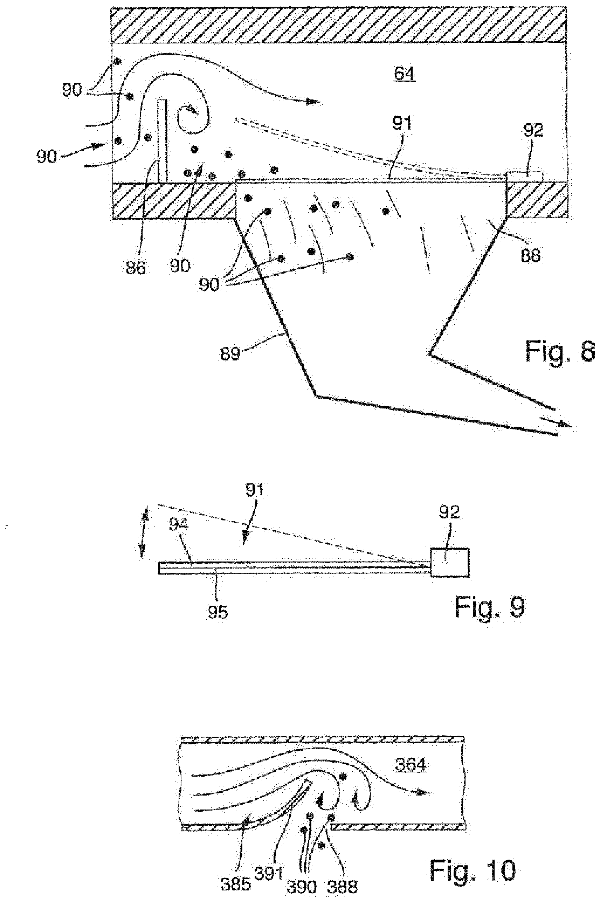

In einer eingangs genannten weiteren Ausgestaltung der Erfindung ist es wünschenswert, dass die Sensorvorrichtung 58, insbesondere die Sensorkammer 69, möglichst frei bleibt von gröberen Verunreinigungen oder Schmutz in der Flüssigkeit. Hierzu kann eine Verwirbelungsvorrichtung vorgesehen sein, wie sie in Fig. 6 schematisch in Draufsicht dargestellt ist mit Vergrößerung in Fig. 7 und Seitenansicht in Fig. 8. In der Sensor-Leitung 53, vorteilhaft kurz vor der Sensorvorrichtung 58 oder sogar darin integriert, insbesondere in deren Baueinheit, die hauptsächlich von dem Gehäuse 60 und der Wasserführung 62 darin gebildet ist, ist eine Verwirbelungsvorrichtung 85 angeordnet. Sie weist einen Vorsprung 86 auf, der gemäß der seitlichen Darstellung aus Fig. 8 als eine Art Gatter oder aufragende Wand ausgebildet sein kann. Der Vorsprung 86 kann geschlossen ausgebildet sein, möglicherweise auch mit Öffnungen, abhängig von der Art oder Stärke der gewünschten Verwirbelungen. In Strömungsrichtung flussabwärts bzw. kurz hinter dem Vorsprung 86 ist eine rechteckige Öffnung 88 nach unten vorgesehen, die in einen Auslass 89 mündet. Dieser ist in der Fig. 1 rechts oben über der Schublade 39 dargestellt, so dass der Auslass 89 in die Schublade 39 münden kann. Alternativ kann er auf hier nicht dargestellte Art und Weise in eine Abwasserleitung 31 münden, so dass gemäß Fig. 8 austretende Partikel 90 als Gegenstände bzw. Verunreinigungen gleich ganz aus der Waschmaschine 11 herausgeführt werden.

Die Auslass-Öffnung 88 ist mit einer Verschlussklappe 91 verschlossen, die rechts mittels einer Lagerung 92 mit einem Boden des Haupt-Kanals 64 bzw. der Sensor-Leitung 53 verbunden ist oder damit befestigt ist. Dies ist auch aus Fig. 8 gut zu erkennen.

Durch den Vorsprung 86 werden in der durchströmenden Flüssigkeit die in Fig. 7 und 8 dargestellten Verwirbelungen erzeugt, die bewirken, dass sich in der Flüssigkeit befindliche Partikel 90 hinter dem Vorsprung 86 anlagern, da sie aus der verwirbelten Flüssigkeit sozusagen herausgeschleudert werden. Dieser Effekt ist bekannt als Snow-Fence-Effekt. Dieser beruht darauf, dass eine Barriere oder ein Vorsprung in einer strömenden Flüssigkeit, möglicherweise auch in strömender Luft, Verwirbelungen stromabwärts davon bewirkt. Durch diese Verwirbelungen werden in der Flüssigkeit oder in dem Fluid enthaltene Gegenstände oder Partikel sozusagen ausgeschieden.

Da sich aber nach kurzer Zeit derart viele Partikel 90 hinter dem Vorsprung 86 ansammeln würden, dass sie von der weiterhin durchströmenden Flüssigkeit wieder mittransportiert werden würden, müssen sie entfernt werden. Dazu dient die Auslass-Öffnung 88. Sollen keine Partikel 90 aus der Flüssigkeit entfernt werden, so bleibt die Verschlussklappe 91 unten und verschließt die Auslass-Öffnung 88. Wird sie dagegen nach oben in die gestrichelt dargestellte Position bewegt, so ist die Auslass-Öffnung 88 geöffnet und die Partikel 90 mitsamt austretender Flüssigkeit können über den Auslass 89 herausgespült werden. Dabei geht natürlich ein Teil der Flüssigkeit verloren oder wird abgeführt, gleichzeitig werden aber eben auch die Partikel 90 entfernt. Über den Öffnungswinkel der Verschlussklappe 91 kann dies auch etwas beeinflusst werden.

Grundsätzlich kann die Verschlussklappe 91 natürlich beliebig angetrieben sein zum Öffnen, beispielsweise mit einem externen Aktor wie einem Elektromotor oder einem Elektromagnet, alternativ einer Formgedächtnislegierung, einem Bimetall odgl.. In einer vorteilhaften Ausgestaltung der Erfindung besteht sie aus zwei Materialien mit unterschiedlichen thermischen Wärmeausdehnungskoeffizienten. Eine obere Materialschicht 94 der zweilagigen Verschlussklappe 91 weist einen geringeren Wärmeausdehnungskoeffizienten auf, und eine untere Materialschicht 95 weist einen höheren Wärmeausdehnungskoeffizienten auf. Die beiden Materialschichten 94 und 95 sind fest und unlösbar miteinander verbunden und mittels der Lagerung 92 am Boden des Haupt-Kanals 64 befestigt. Bei Raumtemperatur kann die in Fig. 9 durchgezogen dargestellte Schließ-Position vorliegen, die Auslass-Öffnung 88 ist also weitgehend oder vorteilhaft vollständig verschlossen. Dazu können auch elastische Dichtungsmittel wie ein Dichtgummi odgl. an Verschlussklappe und/oder Auslass-Öffnung vorgesehen sein. Wird die Temperatur in der hindurchströmenden Flüssigkeit erhöht, beispielsweise durch Betrieb der Heizmittel 51 hinter der Zusatz-Pumpe 50, so wird auch die Verschlussklappe 91 erwärmt. Dann dehnt sich, ähnlich einem bekannten Bimetall-Effekt, die untere Materialschicht 95 stärker aus als die obere Materialschicht 94, was in einer Durchbiegung der Verschlussklappe 91 nach oben resultiert. Die Aufbiegung kann beispielsweise so weit sein, dass das freie Ende der Verschlussklappe 91 die halbe Höhe oder sogar die ganze Höhe des Vorsprungs 86 erreicht. Ein Winkel bei einer linearen Betrachtung zwischen Lagerung 92 rechts und dem freien Ende kann dann zwischen 10° und 25° liegen, so dass die Auslass-Öffnung 88 substanziell weit geöffnet wird zum Ausspülen der Partikel 90. Wenn eine stärkere Aufbiegung der Verschlussklappe 91 möglich ist, ohne dass diese mechanisch beschädigt wird bei Dauerbenutzung, kann sie auch kürzer gemacht werden, so dass auch die Auslass-Öffnung 88 kürzer wird, so dass etwas weniger Flüssigkeit aus dem Haupt-Kanal 64 entweichen kann.

Der Vorteil einer solchermaßen betätigten Verschlussklappe 91 gemäß Fig. 9 besteht darin, dass auf externe und/oder mechanische Aktoren verzichtet werden kann, was eine Vereinfachung bewirkt und den konstruktiven Aufwand deutlich senkt. Des Weiteren kann eine Beeinflussung auch nur mit den genannten Heizmitteln 51 erreicht werden, die möglicherweise auch nicht nur nahe an der Zusatz-Pumpe 50 angeordnet sein müssen, möglicherweise nämlich auch viel näher an der Verschlussklappe.

Eine nochmals weitere alternative Ausgestaltung einer vereinfachten Verwirbelungsvorrichtung 385 in einem Haupt-Kanal 364 ist in Fig. 10 dargestellt. Hier ist eine Verwirbelungsvorrichtung 385 vorgesehen, die sozusagen ohne den Vorsprung auskommt und nur eine Verschlussklappe 391 aufweist. Diese Verschlussklappe 391 ist direkt an einem Boden des Haupt-Kanals 364 befestigt bzw. angeformt, insbesondere beim 3D-Drucken in der Herstellung direkt daran ausgebildet. Die Verschlussklappe 391 besteht vorteilhaft ähnlich Fig. 9 aus zwei Materialschichten mit unterschiedlichem Wärmeausdehnungskoeffizienten, um sie leicht und ohne separate externe Aktoren betätigen zu können. Unterhalb der Verschlussklappe 391 und stromabwärts von ihrer Verbindung mit dem Boden des Haupt-Kanals 364 ist eine Auslass-Öffnung 388 vorgesehen in etwa in Größe der Verschlussklappe 391, vorteilhaft etwas kleiner.

Wenn Partikel 390 aus der strömenden Flüssigkeit entfernt werden sollen, so kann die Verschlussklappe 391 nach oben bewegt werden, vorteilhaft wie vorbeschrieben durch Erwärmung der Flüssigkeit. Dann ragt die Verschlussklappe 391 steil nach oben, hier mit einem Winkel zwischen 50° und 80° am freien Ende. Somit stellt sie ein deutliches Hindernis entsprechend dem Vorsprung 86 gemäß Fig. 8 für die dahinströmende Flüssigkeit dar, so dass sich stromabwärts von der Verschlussklappe 391 die beschriebenen Verwirbelungen ergeben, wie durch die Pfeile dargestellt ist. Dadurch werden Partikel 390 herausgeschleudert bzw. ausgeschieden. Da sich gleichzeitig mit dem Biegen der Verschlussklappe 391 nach oben die Auslass-Öffnung 388 öffnet, können die Partikel 390 zusammen mit etwas Flüssigkeit aus dem Haupt-Kanal 364 entfernt werden. Vorteilhaft erfolgt dies über einen Auslass wie zuvor für das Ausführungsbeispiel der Fig. 6 bis 8 erläutert.

Auf vorbeschriebene Art und Weise können gröbere Partikel oder Gegenstände aus der Flüssigkeit herausgefiltert werden ohne die Notwendigkeit von sonstigen Filtern, die verstopfen oder zugesetzt werden können und dann manuell gereinigt oder gewechselt werden müssen. Durch das Fernhalten dieser Partikel von der Sensorkammer kann die Funktion von darin angeordneten Sensoren verbessert werden. Außerdem kann erreicht werden, dass die relativ dünnen Quer-Leitungen und möglicherweise auch das poröse Material zugesetzt bzw. verstopft werden.

Eine Reduzierung der Durchströmung in der Sensorkammer 69 aufgrund der Ausgestaltung der Wasserführung 62, insbesondere mit den Quer-Leitungen 78a und 78b, kann so sein, dass die Durchströmung der Sensorkammer 69 um mindestens 10 % verringert wird, vorzugsweise um mindestens 50 % oder sogar um mindestens 80 %. Die Strömungsgeschwindigkeit von Flüssigkeit durch die Sensorkammer 69 kann also entsprechend diesen Werten reduziert werden, ohne dass mechanische Elemente wie Ventile, Schieber odgl. benötigt werden. So kann eine erfindungsgemäße Sensorvorrichtung 58 möglichst einfach ausgebildet sein und gleichzeitig möglichst zuverlässig funktionieren.

## Patentansprüche

1. Sensorvorrichtung (58, 158, 258) zur Untersuchung einer Flüssigkeit, wobei die Sensorvorrichtung aufweist:
- eine Wasserführung (62, 162, 262),
- eine Sensorkammer (69, 269) in der Wasserführung,
- einen Sensor (71, 73, 271, 273) in oder an der Sensorkammer zur Untersuchung einer Flüssigkeit,
wobei die Wasserführung (62, 162, 262) aufweist:
- einen Haupt-Kanal (64, 164, 264, 364), in dem Flüssigkeit in einer Fließrichtung entlang strömt,
- eine Einlass-Leitung (67, 167, 267), die an einer Einlass-Öffnung (66, 166, 266) von dem Haupt-Kanal abgeht zu der Sensorkammer (69, 269),
- eine Auslass-Leitung (75, 175, 275), die von der Sensorkammer abgeht zu einer Auslass-Öffnung (76, 176, 276) an dem Hauptkanal (64, 164, 264, 364), wobei die Auslass-Öffnung flussabwärts von der Einlass-Öffnung liegt,
- mindestens eine Quer-Leitung (78, 278) zwischen der Einlass-Leitung (67, 167, 267) und der Auslass-Leitung (75, 175, 275) derart, dass die Quer-Leitung fluidtechnisch parallel geschaltet ist zu der Sensorkammer (69, 269),
**dadurch gekennzeichnet, dass**
- die Einlass-Öffnung (66, 166, 266), die Auslass-Öffnung (76, 176, 276), ein Fluidwiderstand der einen Quer-Leitung (78, 278) und ein Fluidwiderstand der Sensorkammer (69, 269) derart ausgebildet sind, dass bei mindestens einer bestimmten Durchströmung des Haupt-Kanals (64, 164, 264, 364) keine Strömung in der Sensorkammer vorliegt bzw. die Sensorkammer strömungsfrei ist.

2. Sensorvorrichtung nach Anspruch 1, **dadurch gekennzeichnet, dass** die Sensorvorrichtung (58, 158, 258) bis auf Einlass-Öffnungen (66, 166, 266) und Auslass-Öffnungen (76, 176, 276) nach außen wasserdicht ausgebildet ist, insbesondere ein umgebendes Gehäuse (60, 160, 260) aufweist mit Öffnungen für die Wasserführung (62, 162, 262) bzw. den Hauptkanal (64, 164, 264, 364), insbesondere mindestens einer Auslass-Öffnung nach unten und vorzugsweise mindestens einer Zugangsöffnung (81) zu der Sensorkammer (69, 269) von oben, wobei vorzugsweise die Zugangsöffnung (81) für Analysestoffe an der Sensorvorrichtung vorgesehen ist vor, in oder hinter der Sensorkammer in Fließrichtung gesehen.

3. Sensorvorrichtung nach Anspruch 1 oder 2, **dadurch gekennzeichnet, dass** die Wasserführung (62, 162, 262) mit dem Haupt-Kanal (64, 164, 264, 364), der Einlass-Öffnung (66, 166, 266) und der Auslass-Öffnung (76, 176, 276) für einen Venturi-Effekt an der Auslass-Öffnung ausgebildet ist derart, dass zur Einlass-Öffnung in die Einlass-Leitung (67, 167, 267) eintretende Flüssigkeit durch die Auslass-Öffnung von der Auslass-Leitung (75, 175, 275) in den Haupt-Kanal hinein abgesaugt wird bei einer bestimmten Durchströmung des Haupt-Kanals, wobei vorzugsweise vor der Auslass-Öffnung, insbesondere stromabwärts von der Einlass-Öffnung (66, 166, 266), eine Querschnittsverengung (65) als Venturi-Düse für den Venturi-Effekt im Haupt-Kanal (64) vorgesehen ist, wobei vorzugsweise die Auslass-Öffnung (76) innerhalb des verengten Querschnitts in dem Haupt-Kanal vorgesehen ist.

4. Sensorvorrichtung nach einem der vorhergehenden Ansprüche, **dadurch gekennzeichnet, dass** die mindestens eine Quer-Leitung (78, 278) näher an der Einlass-Öffnung (66, 166, 266) und an der Auslass-Öffnung (76, 176, 276) liegt als die Sensorkammer (69, 269), wobei vorzugsweise mehrere Quer-Leitungen vorgesehen sind und jede der Quer-Leitungen (78, 278) näher an der Einlass-Öffnung und an der Auslass-Öffnung liegt als die Sensorkammer.

5. Sensorvorrichtung nach einem der vorhergehenden Ansprüche, **gekennzeichnet durch** eine Verwirbelungsvorrichtung (85, 385) in der Wasserführung (62) bzw. in dem Haupt-Kanal (64, 364), insbesondere vor der Einlass-Öffnung (66), vorzugsweise auch in einer Flüssigkeitsleitung hin zu der Sensorvorrichtung (58), wobei die Verwirbelungsvorrichtung (85, 385) von einer Wand bzw. einer Kanalwand absteht und in die in Fließrichtung strömende Flüssigkeit hineinragt derart, dass die vorbeiströmende Flüssigkeit an der Verwirbelungsvorrichtung vorbeiströmt, wobei vorzugsweise die vorbeiströmende Flüssigkeit vor der Verwirbelungsvorrichtung und dahinter laminar verwirbelt, wobei sich durch die Verwirbelung hinter der Verwirbelungsvorrichtung Partikel (90, 390) oder Gegenstände in der Flüssigkeit, insbesondere mit einer Größe zwischen 0,1 mm und 5 mm, sammeln und so aus der weiterströmenden Flüssigkeit entfernen.

6. Sensorvorrichtung nach Anspruch 5, **dadurch gekennzeichnet, dass** in Fließrichtung hinter der Verwirbelungsvorrichtung (85, 385) eine Öffnung (88, 388) in dem Kanal (64, 364) oder in einer Flüssigkeitsleitung vorgesehen ist, insbesondere an einem in vertikaler Richtung unteren Bereich, wobei vorzugsweise die Öffnung (88, 388) mit einer bewegbaren Verschlussklappe (91, 391) verschlossen ist derart, dass die Verschlussklappe von oben die Öffnung verschließt.

7. Sensorvorrichtung nach einem der vorhergehenden Ansprüche, **dadurch gekennzeichnet, dass** ein Umgebungsmaterial (80) zwischen der Einlass-Leitung (67, 167, 267) und der Auslass-Leitung (75, 175, 275), das an die beiden Leitungen angrenzt, fluiddurchlässig ist, insbesondere porös ist, wobei vorzugsweise in das Umgebungsmaterial (80) ein Zusatzstoff eingebracht ist, der bei Durchströmung des Umgebungsmaterials (80) mit Flüssigkeit mit dieser Flüssigkeit vermischt wird.

8. Sensorvorrichtung nach einem der vorhergehenden Ansprüche, **dadurch gekennzeichnet, dass** der mindestens eine Sensor (71, 73, 271, 273) an oder in der Sensorkammer (69, 269) ausgewählt ist aus der Gruppe: Sensor, Temperatursensor, Biosensor für bakteriologische Verunreinigung, optische Sensoren, Trübungssensor (71, 271), Spektrometer, Farbumschlagssensor, Tensidsensor, Hydrometer bzw. Sedimentations-Sensor, wobei vorzugsweise der Sensor im oberen Bereich der Sensorkammer angeordnet ist, insbesondere an einem höchsten Punkt der Sensorkammer.

9. Sensorvorrichtung nach einem der vorhergehenden Ansprüche, **dadurch gekennzeichnet, dass** elektrische Sensoren vorgesehen sind, insbesondere in der Sensorkammer (69, 269) oder in der Einlass-Leitung (67, 167, 267) oder in der Auslass-Leitung (75, 175, 275).

10. Waschmaschine (11) mit einer Sensorvorrichtung (58, 158, 258) nach einem der vorhergehenden Ansprüche, wobei vorzugsweise die Waschmaschine (11) einen separaten Sensor-Flüssigkeitskreislauf mit einer Sensor-Flüssigkeitsleitung (53) aufweist hin zu der Sensorvorrichtung, vorzugsweise auch weg von der Sensorvorrichtung.

11. Waschmaschine nach Anspruch 10, **dadurch gekennzeichnet, dass** sie eine Zusatz-Pumpe (50) aufweist, die zusätzlich zu einer Haupt-Pumpe vorgesehen ist um Flüssigkeit beim Waschvorgang in der Waschmaschine (11) umzuwälzen bzw. zu zirkulieren zu der Sensorvorrichtung (58, 158, 258), insbesondere zwischen einer Trommel, einer Heizvorrichtung, der Sensorvorrichtung und einem Wassereinlauf in die Trommel, wobei vorzugsweise die Zusatz-Pumpe (50) Heizmittel (51) aufweist und eine Temperaturüberwachung zur Bestimmung der Temperatur der Flüssigkeit in Fließrichtung hinter der Zusatz-Pumpe (50) vorgesehen ist.

12. Verfahren zur Untersuchung einer Flüssigkeit mit einer Sensorvorrichtung (58, 158, 258) nach einem der Ansprüche 1 bis 9 oder mit einer Waschmaschine (11) nach Anspruch 10 oder 11, **dadurch gekennzeichnet, dass** eine Durchströmung des Haupt-Kanals (64, 164, 264, 364) mit Flüssigkeit derart eingestellt wird, dass in der Sensorkammer (69, 269) Flüssigkeit enthalten ist, aber nicht bewegt wird bzw. dass die Flüssigkeit dort verbleibt.

13. Verfahren zur Untersuchung einer Flüssigkeit mit einer Sensorvorrichtung (58, 158, 258) nach einem der Ansprüche 1 bis 9 oder mit einer Waschmaschine (11) nach Anspruch 10 oder 11, **dadurch gekennzeichnet, dass** die Durchströmung der Sensorvorrichtung (58, 158, 258) und des Haupt-Kanals (64, 164, 264, 364) mit Flüssigkeit derart eingestellt wird, dass sich an der Auslass-Öffnung (76, 176, 276) ein Venturi-Effekt ergibt derart, dass zur Einlass-Öffnung (66, 166, 266) in die Einlass-Leitung (67, 167, 267) eintretende Flüssigkeit durch die Auslass-Öffnung von der Auslass-Leitung (75, 175, 275) in den Haupt-Kanal (64, 164, 264, 364) hinein abgesaugt wird.

## Claims

1. Sensor device (58, 158, 258) for analyzing a liquid, wherein the sensor device has:
- a water circuit (62, 162, 262),
- a sensor chamber (69, 269) in the water circuit,
- a sensor (71, 73, 271, 273) in or on the sensor chamber for analyzing a liquid, wherein the water circuit (62, 162, 262) has:
- a main duct (64, 164, 264, 364) in and along which liquid flows in a flow direction,
- an inlet line (67, 167, 267) which exits the main duct at an inlet opening (66, 166, 266) to the sensor chamber (69, 269),
- an outlet line (75, 175, 275) which exits the sensor chamber to an outlet opening (76, 176, 276) at the main duct (64, 164, 264, 364), wherein the outlet opening is downstream of the inlet opening,
- at least one transverse line (78, 278) between the inlet line (67, 167, 267) and the outlet line (75, 175, 275), such that the transverse line is fluidically connected parallel to the sensor chamber (69, 269),
**characterized in that**
- the inlet opening (66, 166, 266), the outlet opening (76, 176, 276), a fluid resistance of the one transverse line (78, 278) and a fluid resistance of the sensor chamber (69, 269) are designed such that in the case of at least one defined flow rate through the main duct (64, 164, 264, 364) there is no flow inside the sensor chamber, or the sensor chamber is free of flow.

2. Sensor device according to claim 1, **characterized in that** the sensor device (58, 158, 258) is designed water-tight to the outside except for inlet openings (66, 166, 266) and outlet openings (76, 176, 276) and in particular has an enclosing housing (60, 160, 260) with openings for the water circuit (62, 162, 262) or for the main duct (64, 164, 264, 364), in particular at least one outlet opening downwards and preferably at least one access opening (81) to the sensor chamber (69, 269) from above, wherein preferably the access opening (81) for analysis materials is provided on the sensor device in front of, in or behind the sensor chamber when seen in the flow direction.

3. Sensor device according to claim 1 or 2, **characterized in that** the water circuit (62, 162, 262) with the main duct (64, 164, 264, 364), the inlet opening (66, 166, 266) and the outlet opening (76, 176, 276) is designed for a Venturi effect at the outlet opening such that liquid entering the inlet line (67, 167, 267) at the inlet opening is sucked into the main duct from the outlet line (75, 175, 275) through the outlet opening in the case of a defined flow rate through the main duct, wherein a cross-sectional constriction (65) is provided preferably in front of the outlet opening, in particular downstream of the inlet opening (66, 166, 266), in the main duct (64) as a Venturi nozzle for the Venturi effect, wherein preferably the outlet opening (76) is provided inside the constricted cross-section in the main duct.

4. Sensor device according to any of the preceding claims, **characterized in that** the at least one transverse line (78, 278) is closer to the inlet opening (66, 166, 266) and to the outlet opening (76, 176, 276) than the sensor chamber (69, 269) is, wherein preferably a plurality of transverse lines are provided and each of the transverse lines (78, 278) is closer to the inlet opening and to the outlet opening than the sensor chamber is.

5. Sensor device according to any of the preceding claims, **characterized by** a turbulence device (85, 385) in the water circuit (62) or in the main duct (64, 364), in particular in front of the inlet opening (66), preferably also in a liquid line to the sensor device (58), wherein the turbulence device (85, 385) extends from a wall or from a duct wall and projects into the liquid flowing in the flow direction such that the liquid flowing past passes the turbulence device, wherein preferably the liquid flowing past is laminar in front of the turbulence device and turbulent behind it, wherein particles (90, 390) or objects in the liquid, in particular with a size between 0.1 mm and 5 mm, collect due to the turbulence behind the turbulence device and can thus be removed from the liquid as it flows on.

6. Sensor device according to claim 5, **characterized in that** an opening (88, 388) is provided in the duct (64, 364) or in a liquid line behind the turbulence device (85, 385) in the flow direction, in particular at an area at the bottom in the vertical direction, wherein preferably the opening (88, 388) is closed with a movable closing flap (91, 391) such that the closing flap closes the opening from above.

7. Sensor device according to any of the preceding claims, **characterized in that** a surrounding material (80) between the inlet line (67, 167, 267) and the outlet line (75, 175, 275) adjacent to the two lines is fluid-permeable, in particular porous, wherein preferably an additive which is mixed with the liquid when this liquid flows through the surrounding material (80) is added into the surrounding material (80).

8. Sensor device according to any of the preceding claims, **characterized in that** the at least one sensor (71, 73, 271, 273) on or in the sensor chamber (69, 269) is selected from the group: sensor, temperature sensor, bio sensor for bacteriological contamination, optical sensor, turbidity sensor (71, 271), spectrometer, color change sensor, tenside sensor, hydrometer or sedimentation sensor, wherein preferably the sensor is arranged in the upper area of the sensor chamber, in particular at a highest point of the sensor chamber.

9. Sensor device according to any of the preceding claims, **characterized in that** electrical sensors are provided, in particular in the sensor chamber (69, 269) or in the inlet line (67, 167, 267) or in the outlet line (75, 175, 275).

10. Washing machine (11) with a sensor device (58, 158, 258) according to any of the preceding claims, wherein preferably the washing machine (11) has a separate sensor-liquid circuit with a sensor-liquid line (53) to the sensor device, preferably also away from the sensor device.

11. Washing machine according to claim 10, **characterized in that** it has an additional pump (50) which is provided additionally to a main pump, in order to circulate, during the wash cycle, liquid in the washing machine (11) to the sensor device (58, 158, 258), in particular between a drum, a heating device, the sensor device and a water inlet into the drum, wherein preferably the additional pump (50) has heating means (51), and temperature monitoring is provided for determining the temperature of the liquid in the flow direction behind the additional pump (50).

12. Method for analyzing a liquid with a sensor device (58, 158, 258) according to any of claims 1 to 9 or with a washing machine (11) according to claim 10 or 11, **characterized in that** a flow rate of liquid through the main duct (64, 164, 264, 364) is set such that liquid is contained in the sensor chamber (69, 269) but is not moved or that the liquid remains there.

13. Method for analyzing a liquid with a sensor device (58, 158, 258) according to any of claims 1 to 9 or with a washing machine (11) according to claim 10 or 11, **characterized in that** the flow rate of liquid through the sensor device (58, 158, 258) and the main duct (64, 164, 264, 364) is set such that a Venturi effect is obtained at the outlet opening (76, 176, 276) such that liquid entering the inlet line (67, 167, 267) at the inlet opening (66, 166, 266) is sucked into the main duct (64, 164, 264, 364) from the outlet line (75, 175, 275) through the outlet opening.

## Revendications

1. Dispositif à capteur (58, 158, 258) pour examiner un liquide, sachant que le dispositif à capteur présente :
- une conduite d'eau (62, 162, 262),
- une chambre à capteur (69, 269) dans la conduite d'eau,
- un capteur (71, 73, 271, 273) dans ou sur la chambre à capteur pour examiner un liquide,
sachant que la conduite d'eau (62, 162, 262) présente :
- un canal principal (64, 164, 264, 364) dans lequel le liquide s'écoule dans un sens d'écoulement,
- un conduit d'admission (67, 167, 267) qui part du canal principal au niveau d'un orifice d'admission (66, 166, 266) et mène à la chambre à capteur (69, 269),
- un conduit d'évacuation (75, 175, 275) qui part de la chambre à capteur et mène à un orifice d'évacuation (76, 176, 276) au niveau du canal principal (64, 164, 264, 364), sachant que l'orifice d'évacuation se situe en aval de l'orifice d'admission,
- au moins un conduit transversal (78, 278) situé entre le conduit d'admission (67, 167, 267) et le conduit d'évacuation (75, 175, 275) de sorte que le conduit transversal est raccordé en parallèle d'un point de vue hydraulique, par rapport à la chambre à capteur (69, 269),
**caractérisé en ce que**
- l'orifice d'admission (66, 166, 266), l'orifice d'évacuation (76, 176, 276), une résistance au fluide du conduit transversal (78, 278) et une résistance au fluide de la chambre à capteur (69, 269) sont constitués de telle sorte que pour au moins un certain flux à travers le canal principal (64, 164, 264, 364), aucun écoulement n'est présent dans la chambre à capteur ou que la chambre à capteur est sans écoulement.

2. Dispositif à capteur selon la revendication 1, **caractérisé en ce que** le dispositif à capteur (58, 158, 258) à l'exception des orifices d'admission (66, 166, 266) et des orifices d'évacuation (76, 176, 276) est constitué étanche à l'eau vers l'extérieur, notamment qu'il présente un boîtier environnant (60, 160, 260) avec des orifices pour la conduite d'eau (62, 162, 262) ou le canal principal (64, 164, 264, 364), notamment au moins un orifice d'évacuation vers le bas et, de préférence, au moins un orifice d'accès (81) à la chambre à capteur (69, 269) par le haut, sachant que de préférence, l'orifice d'accès (81) pour les matières d'analyse est prévu au nouveau du dispositif à capteur, avant, à l'intérieur ou après la chambre à capteur, vu dans le sens d'écoulement.

3. Dispositif à capteur selon la revendication 1 ou 2, **caractérisé en ce que** la conduite d'eau (62, 162, 262) avec le canal principal (64, 164, 264, 364), l'orifice d'admission (66, 166, 266) et l'orifice d'évacuation (76, 176, 276) est constitué pour un effet venturi au niveau de l'orifice d'évacuation de telle sorte que du liquide entrant dans le conduit d'admission (67, 167, 267) au niveau de l'orifice d'admission est aspiré dans le canal principal à travers l'orifice d'évacuation du conduit d'évacuation (75, 175, 275) pour un certain flux à travers le canal principal, sachant que de préférence, avant l'orifice d'évacuation, notamment en aval de l'orifice d'admission (66, 166, 266), un rétrécissement de la section (65) est prévu comme buse pour l'effet venturi dans le canal principal (64), sachant que de préférence, l'orifice d'évacuation (76) est prévu à l'intérieur de la section rétrécie dans le canal principal.

4. Dispositif à capteur selon l'une des revendications précédentes, **caractérisé en ce que** ledit au moins un conduit transversal (78, 278) se situe plus près de l'orifice d'admission (66, 166, 266) et de l'orifice d'évacuation (76, 176, 276) que la chambre à capteur (69, 269), sachant que de préférence, plusieurs conduits transversaux sont prévus et que chacun des conduits transversaux (78, 278) est plus proche de l'orifice d'admission et de l'orifice d'évacuation que la chambre à capteur.

5. Dispositif à capteur selon l'une des revendications précédentes, **caractérisé par** un dispositif de tourbillonnement (85, 385) dans la conduite d'eau (62) ou dans le canal principal (64, 364), notamment avant l'orifice d'admission (66), de préférence également dans une conduite de liquide vers le dispositif à capteur (58), sachant que le dispositif de tourbillonnement (85, 385) sort d'une paroi ou d'une paroi du canal et fait saillie dans le liquide s'écoulant dans le sens d'écoulement de sorte que le liquide passant passe le dispositif de tourbillonnement, sachant que de préférence, le liquide passant est laminaire avant le dispositif de tourbillonnement et est amené, après, à tourbillonner, sachant qu'en raison du tourbillonnement derrière le dispositif de tourbillonnement, des particules (90, 390) ou des objets dans le liquide, notamment d'une taille comprise entre 0,1 mm et 5 mm, s'accumulent et sont ainsi retirés du liquide continuant à s'écouler.

6. Dispositif à capteur selon la revendication 5, **caractérisé en ce qu'**est prévu, derrière le dispositif de tourbillonnement (85, 385) dans le sens d'écoulement, un orifice (88, 388) dans le canal (64, 364) ou dans un conduit de liquide, notamment dans une zone inférieure dans le sens vertical, sachant que de préférence, l'orifice (88, 388) est fermé par un clapet de fermeture (91, 391) mobile de sorte que le clapet de fermeture ferme l'orifice par le haut.

7. Dispositif à capteur selon l'une des revendications précédentes, **caractérisé en ce qu'**un matériau environnant (80) compris entre le conduit d'admission (67, 167, 267) et le conduit d'évacuation (75, 175, 275) et jouxtant les deux conduits est perméable au fluide, notamment poreux, sachant que de préférence est logé dans le matériau environnant (80) une matière additionnelle qui, lors de l'écoulement du liquide à travers le matériau environnant (80), se mélange à ce liquide.

8. Dispositif à capteur selon l'une des revendications précédentes, **caractérisé en ce que** ledit au moins un capteur (71, 73, 271, 273) sur ou dans la chambre à capteur (69, 269) est sélectionné parmi le groupe suivant : Capteur, capteur de température, biocapteur pour contamination bactériologique, capteurs optiques, capteur d'opacité (71, 271), spectromètre, capteur de virage de teinte, capteur d'agents tensioactifs, hydromètre ou capteur de sédimentation, sachant que, de préférence, le capteur est disposé dans la zone supérieure de la chambre à capteur, notamment à un point supérieur de la chambre à capteur.

9. Dispositif à capteur selon une des revendications précédentes, **caractérisé en ce que** des capteurs électriques sont prévus, notamment dans la chambre à capteur (69, 269) ou dans le conduit d'admission (67, 167, 267) ou dans le conduit d'évacuation (75, 175, 275).

10. Lave-linge (11) avec un dispositif à capteur (58, 158, 258) selon une des revendications précédentes, sachant que de préférence, le lave-linge (11) présente un circuit de liquide à capteur séparé avec une conduite de liquide à capteur (53) en direction du dispositif à capteur et de préférence également partant du dispositif à capteur.

11. Lave-linge selon la revendication 10, **caractérisé en ce qu'**il présente une pompe supplémentaire (50) qui est prévue en plus d'une pompe principale pour faire circuler le liquide dans le lave-linge (11) lors du lavage vers le dispositif à capteur (58, 158, 258), notamment entre un tambour, un dispositif de chauffe, le dispositif à capteur et une admission d'eau dans le tambour, sachant que de préférence, la pompe additionnelle (50) présente des éléments chauffants (51) et qu'une surveillance de la température est prévue après la pompe additionnelle (50) dans le sens d'écoulement pour déterminer la température du liquide.

12. Procédé pour examiner un liquide avec un dispositif à capteur (58, 158, 258) selon l'une des revendications 1 à 9 ou avec un lave-linge (11) selon la revendication 10 ou 11, **caractérisé en ce qu'**un flux du liquide à travers le canal principal (64, 164, 264, 364) est réglé de sorte que du liquide est contenu dans la chambre à capteur (69, 269) mais n'est pas mis en mouvement ou que le liquide y reste.

13. Procédé pour examiner un liquide avec un dispositif à capteur (58, 158, 258) selon une des revendications 1 à 9 ou avec un lave-linge (11) selon la revendication 10 ou 11, **caractérisé en ce que** le flux du liquide à travers le dispositif à capteur (58, 158, 258) et le canal principal (64, 164, 264, 364) est réglé de sorte qu'un effet venturi apparaît sur l'orifice d'évacuation (76, 176, 276) de sorte que du liquide entrant dans le conduit d'admission (67, 167, 267) au niveau de l'orifice d'admission (66, 166, 266) est aspiré à travers l'orifice d'évacuation du conduit d'évacuation (75, 175, 275) pour rejoindre le canal principal (64, 164, 264, 364).
